# EUROPÄISCHE PATENTSCHRIFT

(11) **EP 3 019 455 B1**
(45) Veröffentlichungstag und Bekanntmachung des Hinweises auf die Patenterteilung: **03.07.2019**
(21) Anmeldenummer: 14739121.3
(22) Anmeldetag: 09.07.2014
(51) Int. Cl.: C04B 28/02, C04B 22/00, C04B 103/52, C04B 103/12

(54) **ZUSATZMITTELKOMBINATION AUS EINEM MAHLHILFSMITTEL UND EINEM BETONZUSATZMITTEL ZUR BESCHLEUNIGUNG DER HYDRATATION VON ZEMENTÖSEN BINDEMITTELN**
ADDITIVE COMBINATION COMPRISING A GRINDING AID AND A CONCRETE ADMIXTURE FOR ACCELERATING THE HYDRATION OF CEMENTITIOUS BINDERS
COMBINAISON D'ADDITIFS COMPRENANT UN AGENT DE BROYAGE ET UN ADDITIF DE BÉTON POUR ACCÉLÉRER L'HYDRATATION DE LIANTS CIMENTEUX

(30) Priorität: 12.07.2013 EP 13176377
(43) Veröffentlichungstag der Anmeldung: 18.05.2016
(73) Patentinhaber: Sika Technology AG, 6340 Baar (CH)
(72) Erfinder: MÜLLER, Thomas, 69115 Heidelberg (DE); BÜRGE, Christian, CH-5503 Schafisheim (CH); MARAZZANI, Beat, CH-8102 Oberengstringen (CH); KURZ, Christophe, CH-5304 Endingen (CH)
(74) Vertreter: Sika Patent Attorneys
(86) Internationale Anmeldenummer: PCT/EP2014/064735
(87) Internationale Veröffentlichungsnummer: WO 2015/004196

(56) Entgegenhaltungen:
- WO-A1-2010/026155
- WO-A1-2011/022217
- WO-A1-2012/025567
- WO-A1-2012/072466
- WO-A1-2013/083627
- US-A- 5 017 234

## Beschreibung

### Technisches Gebiet

Die Erfindung betrifft eine Zusatzmittelkombination für Zement umfassende Zusammensetzungen zur Beschleunigung der Zementhydratation, ein Verfahren zur Herstellung eines Bauteils aus der Zement umfassenden Zusammensetzung unter Einsatz der Zusatzmittelkombination und die Verwendung der Zusatzmittelkombination für Zement umfassende Zusammensetzungen als Erhärtungsbeschleuniger.

### Stand der Technik

Zusammensetzungen auf Basis von anorganischen hydraulischen Bindemitteln wie Zement, z.B. Beton oder Mörtel, werden schon seit langem verwendet, um Bauteile herzustellen. Die das hydraulische Bindemittel enthaltende Zusammensetzung wird hierfür mit Wasser gemischt, wobei eine chemische Reaktion des hydraulischen Bindemittels mit Wasser stattfindet, was als Hydratation bezeichnet wird. Durch die Hydratation erstarrt und härtet die Zusammensetzung zu einem festen Formkörper.

Je nach Anwendung werden verschiedene Anforderungen an das Eigenschaftsprofil der Zement enthaltenden Zusammensetzungen hinsichtlich des Erstarrungs- und Härtungsprozesses und der Eigenschaften des fertigen Produkts gestellt.

Bei Beton- oder Stahlbetonfertigteilen oder bei Fahrbahn- oder Pistensanierungen wird z.B. vermehrt eine hohe Frühfestigkeit gefordert, damit die

Fertigteile bereits nach wenigen Stunden entschalt, transportiert, gestapelt oder vorgespannt werden können oder die Fahrbahnen oder Pisten befahren werden können. Um diese Zielsetzung in der Praxis zu erreichen, werden neben leistungsfähigen Betonrezepturen, wie niedriger w/z-Wert oder hoher Zementgehalt, oftmals auch Wärme- oder Dampfbehandlungen angewendet. Diese Behandlungen brauchen viel Energie, so dass aufgrund steigender Energiepreise, erheblicher Investitionskosten und Dauerhaftigkeits- sowie Sichtbetonproblemen zunehmend von dieser Behandlung abgesehen wird und nach anderen Wegen zur Beschleunigung des Erhärtungsprozesses gesucht wird.

Insbesondere für Betreiber von sogenannten Betonfertigteil-Werken ist ein schnelles Erstarren des Frischbetons in einer als Schalung verwendeten Bauteilform von enormer Bedeutung, um ein schnelles Ausschalen der Betonbauteile zu ermöglichen. Das Ausschalen ist der geschwindigkeitsbestimmende Schritt in diesen Werken, da nur eine limitierte Anzahl an Bauteilformen zur Verfügung steht.

Es sind zwar Zusatzmittel bekannt, die eine Beschleunigung der Erstarrung und Erhärtung des Frischbetons bewirken, allerdings besteht hier noch Verbesserungsbedarf, um die Zeitspanne bis zur Ausschalung der Betonbauteile zu verkürzen.

WO 2012/072466 A1 betrifft eine feste Zusammensetzung enthaltend ein Calcium-Silicat-Hydrat und ein wasserquellbares Polymer, welche als Mahlhilfsmittel zur Herstellung von Zement verwendet werden kann. Andere Mahlhilfsmittel können zusätzlich verwendet werden, wofür z.B. Mono- und Polyglykole, Polyalkohole, Aminoalkohole, organische Säuren und deren Salze, Aminosäuren, Zucker und Rückstände aus der Zuckerproduktion, anorganische Salze und organische Polymere aufgeführt werden.

WO 2013/083627 A1 betrifft einen Erhärtungsbeschleuniger für mineralische Bindemittel umfassend ein Umsetzungsprodukt aus einer Calciumverbindung und einer Siliciumverbindung und eine Säure. Der Erhärtungsbeschleuniger kann weitere erhärtungsbeschleunigende Substanzen wie Aminoalkohole, Hydroxycarbonsäuren, Alkali- und Erdalkalithiocyanate, Alkali- und Erdalkalihalogenide, Glyzerin oder Glyzerinderivaten umfassen.

WO 2012/025567 A1 beschreibt einen Erhärtungsbeschleuniger für hydraulische Bindemittel umfassend ein Umsetzungsprodukt aus einer Calciumverbindung und einer Siliciumverbindung. Der Erhärtungsbeschleuniger kann zusätzliche Additive wie weitere beschleunigende Substanzen, Säuren oder deren Salze, aminhaltige Substanzen, Verzögerer, Schwindreduzierer, Entschäumer oder Schaumbildner enthalten.

WO 2011/022217 A1 beschreibt eine Additivzusammensetzung, die einen speziellen Luftporenbildner und einen speziellen Luftporenminderer umfasst, die zu Zementklinker gegeben werden kann. Dem Zementklinker können weitere herkömmliche Zementadditive zugesetzt werden.

US 5017234 A betrifft einen Zement, der eine Mischung von einem Klinker und einem Trialkanolamin mit mindestens einer C3-C5-Hydroxyalkylgruppe umfasst. Dem Zement können weitere Additive zugesetzt werden.

### Darstellung der Erfindung

Die Aufgabe der vorliegenden Erfindung bestand daher in der Bereitstellung eines Zusatzes für Zement enthaltende Zusammensetzungen, die eine beschleunigte Zementhydratation und damit eine schnellere Erstarrung und Erhärtung der Zement enthaltenden Zusammensetzungen und damit eine schnellere Ausschalung der gebildeten Bauteile ermöglichen.

Überraschenderweise wurde gefunden, dass diese Aufgabe gelöst werden konnte durch eine Kombination von zwei speziellen Zusatzmitteln, nämlich einem Mahlhilfsmittel und einem Betonzusatzmittel, die der Zusammensetzung umfassend Zement in geeigneter Weise zugesetzt werden.

Dementsprechend betrifft die vorliegende Erfindung eine Zusatzmittelkombination aus einem Mahlhilfsmittel und einem Betonzusatzmittel für eine Zusammensetzung umfassend Zement zur Beschleunigung der Zementhydratation, wobei das Mahlhilfsmittel mindestens einen Aminoalkohol und mindestens eine die Zementhydratation beschleunigende Substanz ausgewählt aus einem Chlorid, einem Thiocyanat oder einer Kombination von einem Chlorid und einem Thiocyanat umfasst, und das Betonzusatzmittel ein Umsetzungsprodukt aus mindestens einer Calciumverbindung mit mindestens einer Siliciumverbindung ausgewählt aus einer Siliciumdioxidverbindung, einer Kieselsäureverbindung und einer Silicatverbindung umfasst.

Durch Verwendung einer Kombination des Mahlhilfsmittels und des Betonzusatzmittels wird eine stark beschleunigte Hydratation von zementösen Bindemitteln erzielt. Wird eine Zusammensetzung umfassend Zement mit dem Mahlhilfsmittel und dem Betonzusatzmittel versetzt, z.B. indem Zement, der mit dem Mahlhilfsmittel gemahlen wurde, zu Beton verarbeitet wird, wobei das Betonzusatzmittel zugegeben wird, tritt überraschenderweise eine zusätzliche Beschleunigung der Hydratation auf, die nicht durch additive Effekte der einzelnen Komponenten erklärbar ist.

Auf diese Weise wird eine deutlich schnellere Erstarrung und Erhärtung des Frischbetons ermöglicht, so dass, z.B. bei der Herstellung von Betonfertigteilen, die Zeitspanne bis zur Ausschalung der Bauteile deutlich verkürzt werden kann. Die Formen für die Bauteile stehen bei Einsatz der genannten Produkte wieder schneller zur Verfügung und der Betreiber kann insgesamt die Produktion der Betonbauteile erhöhen.

Ein weiterer Vorteil ist eine erhöhte Zementproduktion, wenn der Klinker in Anwesenheit des Mahlhilfsmittels zum Zement vermahlen wird.

Ein besonders überraschender zusätzlicher Vorteil besteht ferner darin, dass durch die genannte Kombination von Mahlhilfsmittel und Betonzusatzmittel eine erhöhte Druckfestigkeit im Vergleich zur Anwendung der einzelnen Komponenten erreicht wird.

Im Folgenden wird die Erfindung im Einzelnen erläutert.

### Weg zur Ausführung der Erfindung

Die erfindungsgemäße Zusatzmittelkombination beinhaltet ein Mahlhilfsmittel und ein Betonzusatzmittel. Das Mahlhilfsmittel umfasst mindestens einen Aminoalkohol und mindestens eine die Zementhydratation beschleunigende Substanz ausgewählt aus einem Chlorid, einem Thiocyanat oder einer Kombination von einem Chlorid und einem Thiocyanat.

Es können ein oder mehrere Aminoalkohole eingesetzt werden. Aminoalkohole weisen mindestens eine Amingruppe und mindestens eine Hydroxylgruppe auf. Der Aminoalkohol ist bevorzugt ein Amin, z.B. ein Monoamin, ein Diamin oder ein Polyamin mit mehr als zwei Aminogruppen, der mindestens eine Alkanolgruppe, bevorzugt 1 bis 4 Alkanolgruppen, an mindestens einem N-Atom gebunden aufweist. Die Alkanolgruppe weist mindestens eine Hydroxygruppe, bevorzugt 1 bis 3, besonders bevorzugt 1 Hydroxygruppe auf. Bevorzugt handelt es sich um eine C₁-C₄-Alkanolgruppe, z.B. eine Methanol-, Ethanol-, Isopropanol- oder n-Propanolgruppe. Der Aminoalkohol kann gegebenenfalls ein oder mehrere weitere Substituenten an der Aminogruppe aufweisen, z.B. eine C₁-C₄-Alkylgruppe, wie eine Methyl-, Ethyl-, Isopropyl- oder n-Propylgruppe.

Beispiele für geeignete Aminoalkohole sind Monoethanolamin (MEA), Diethanolamin (DEA), Triethanolamin (TEA), Diethanolisopropanolamin, Ethanoldiisopropanolamin, Isopropanolamin, Diisopropanolamin (DiPA), Triisopropanolamin (TiPA), N-Methyldiisopropanolamin (MDiPA), N-Methyldiethanolamin (MDEA), N-Ethyldiethanolamin (EDEA), N,N,N',N'-Tetrakis-(hydroxyethyl)-ethylendiamin (THEED), 2-(Diisopropylamino)ethanol, 2-(2-Aminoethylamino)ethanol, N,N'-Bis-(2-hydroxyethyl)ethylendiamin, 2-Amino-2-methyl-1,3-propandiol (AMPD), Tris-(hydroxymethyl)-aminomethan (TRIS), 3-Amino-1,2-propandiol (APD), 2-(2-Aminoethoxy)ethanol und N,N,N',N'-Tetrakis(2-hydroxypropyl)-ethylendiamin (THPED).

Besonders bevorzugt eingesetzte Aminoalkohole sind Triethanolamin, Diisopropanolamin, Triisopropanolamin, Diethanolisopropanolamin, N-Methyldiisopropanolamin und N-Methyldiethanolamin.

Das Mahlhilfsmittel umfasst ferner eine oder mehrere die Zementhydratation beschleunigende Substanzen ausgewählt aus einem Chlorid, einem Thiocyanat oder einer Kombination von einem Chlorid und einem Thiocyanat. Bei der die Zementhydratation beschleunigenden Substanz handelt es sich bevorzugt um ein Metallsalz, bevorzugt um ein Alkali- oder Erdalkalisalz, von einem Chlorid, einem Thiocyanat oder einer Kombination von einem Chlorid und einem Thiocyanat.

Die mindestens eine die Zementhydratation beschleunigende Substanz ist bevorzugt ein Alkali- oder Erdalkalichlorid, Alkali- oder Erdalkalithiocyanat,. Bei dem Alkali- oder Erdalkalimetall für diese Salze handelt es sich bevorzugt um Li, Na, K, Mg und Ca.

Konkrete Beispiele für geeignete die Zementhydratation beschleunigende Substanzen sind Calciumchlorid, Natriumchlorid, Calciumthiocyanat, Natriumthiocyanat, und Kombinationen von zwei oder mehr dieser Substanzen.

In einer bevorzugten Ausführungsform wird die mindestens eine die Zementhydratation beschleunigende Substanz aus einem Chlorid, insbesondere einem Alkali- oder Erdalkalichlorid, einem Thiocyanat, insbesondere einem Alkali- oder Erdalkalithiocyanat, oder einer Kombination von einem Chlorid, insbesondere einem Alkali- oder Erdalkalichlorid, und einem Thiocyanat, insbesondere einem Alkali- oder Erdalkalithiocyanat, ausgewählt, wobei die genannte Kombination besonders bevorzugt ist.

In einer optionalen und bevorzugten Ausführungsform umfasst das Mahlhilfsmittel ferner ein oder mehrere Glykole. Als Glykole sind dabei insbesondere Alkylenglykole geeignet, z.B. Ethylenglykole und Propylenglykole, insbesondere Glykole der Formel OH-(CH₂-CH₂O)ₙ-CH₂CH₂-OH mit n = 0 - 20, insbesondere 0, 1, 2 oder 3. Besonders bevorzugte Glykole sind Mono-, Di- und Polyglykole von Ethylen und Propylen. Insbesondere bevorzugt sind Diglykole, wie Diethylenglykol und Dipropylenglykol.

Beispiele für geeignete Glykole sind Monoethylenglykol, Diethylenglykol, Triethylenglykol, Tetraethylenglykol, Pentaethylenglykol, Polyethylenglykol, insbesondere mit 6 oder mehr Ethylen-Einheiten, z.B. PEG 200, Neopentylglycol, Hexylenglykol, Propylenglykol, Dipropylenglykol, Tripropylenglykol, Polypropylenglykol und Reaktionsprodukte aus Ethylen- und Propylenoxid, wobei Diethylenglykol, Propylenglykol und Dipropylenglykol besonders bevorzugt sind.

Das Mahlhilfsmittel enthält bevorzugt 10 bis 40 Gew.-% der mindestens einen die Zementhydratation beschleunigenden Substanz ausgewählt aus einem Chlorid, einem Thiocyanat oder einer Kombination von einem Chlorid und einem Thiocyanat, bevorzugt Alkali- oder Erdalkalichloriden und/oder Alkali- oder Erdalkalithiocyanaten, 2 bis 40 Gew.-% mindestens eines Aminoalkohols, bevorzugt Triethanolamin, und, sofern eingesetzt, 2 bis 25 Gew.-% mindestens eines Glykols, bevorzugt Diethylenglykol.

In einer besonders bevorzugten Ausführungsform enthält das Mahlhilfsmittel 5 bis 25 Gew.-% eines oder mehrerer Alkali- und/oder Erdalkalichloride, 5 bis 25 Gew.-% eines oder mehrerer Alkali- und/oder Erdalkalithiocyanate, 2 bis 30 Gew.-% eines oder mehrerer Aminoalkohole, bevorzugt Triethanolamin, und, sofern eingesetzt, 2 bis 25 Gew.-% eines oder mehrerer Glykole, bevorzugt Diethylenglykol.

Das Mahlhilfsmittel kann gegebenenfalls ein oder mehrere weitere übliche Additive enthalten. Beispiele sind Carbonsäuren, Entschäumer und Polymerverbindungen wie Polycarboxylatether und Ligninsulfonate.

Das Mahlhilfsmittel kann in flüssiger Form vorliegen, z.B. als Lösung oder Dispersion. Das Mahlhilfsmittel ist bevorzugt eine wässrige Lösung oder eine wässrige Dispersion. Das Mahlhilfsmittel kann aber auch in fester Form eingesetzt werden, z.B. als Pulver oder aufgebracht auf einem festen Trägermaterial.

Die zweite Komponente der Zusatzmittelkombination ist ein Betonzusatzmittel, das ein Umsetzungsprodukt aus mindestens einer Calciumverbindung mit mindestens einer Siliciumverbindung ausgewählt aus einer Siliciumdioxidverbindung, einer Kieselsäureverbindung und einer Silicatverbindung umfasst.

Bei der mindestens einen Calciumverbindung handelt es sich vorzugsweise um Calciumsalze mit anorganischen oder organischen Anionen. Typische Beispiele für die Calciumverbindung sind Calciumchlorid, Calciumnitrat, Calciumformiat, Calciumacetat, Calciumbicarbonat, Calciumbromid, Calciumcitrat, Calciumchlorat, Calciumhydroxid, Calciumoxid, Calciumhypochlorid, Calciumiodat, Calciumiodid, Calciumlactat, Calciumnitrit, Calciumphosphat, Calciumpropionat, Calciumsulphat, Calciumsulphat-hemihydrat, Calciumsulphate-dihydrat, Calciumsulphid, Calciumtartrat, Calciumgluconat, Calciumsulfamat, Calciummaleinat, Calciumfumarat, Calciumadipat und Calciumaluminat. Vorzugsweise ist die Calciumverbindung ausgewählt aus der Gruppe bestehend aus Calciumnitrat und Calciumsulfamat.

Wenn als Calciumverbindung Calciumnitrat verwendet wird, ergibt sich eine besonders hohe Druckfestigkeit in hydraulischen Bindemitteln. Wenn als Calciumverbindung Calciumsulfamat verwendet wird, dies ist insbesondere für ein hohes Ausbreitmass in hydraulischen Bindemitteln vorteilhaft.

Die mindestens eine Calciumverbindung wird mit mindestens einer Siliciumverbindung ausgewählt aus einer Siliciumdioxidverbindung, einer Kieselsäureverbindung und einer Silicatverbindung umgesetzt, um ein Umsetzungsprodukt zu erhalten. Beispiele für die Siliciumverbindung sind Quarzsand, Kieselsäuren, z.B. Silicasol, pyrogene Kieselsäure und gefällte Kieselsäure, Wasserglas, wie Natrium- und Alkalisilicate und deren wässrige Lösungen. Die mindestens eine Siliciumverbindung ist bevorzugt ein Silicasol, Wasserglas, pyrogene Kieselsäure oder gefällte Kieselsäure.

Silicasole, die auch als Kieselsole oder Kieselsäuresole bezeichnet werden, sind in der Regel wässrige kolloidale Lösungen von Polykieselsäure-Kolloiden. Der SiO₂-Gehalt typischer Silicasole kann 30 bis 60 Gew.-% betragen. Je nach Teilchengröße der Kolloidpartikel ist Silicasol milchig-trüb bis farblos- klar. Der durchschnittliche Partikeldurchmesser kann z.B. im Bereich von 1 bis 150 nm, bevorzugt von 1 bis 50 nm und bevorzugter von 1 bis 15 nm liegen.

Insbesondere handelt es sich bei dem Silicasol um ein Silicasol mit einem durchschnittlichen Partikeldurchmesser von 1 - 150 nm, insbesondere von 1 - 50 nm, bevorzugt 1.2 - 25 nm, im Speziellen 1.3 - 20 nm, ganz besonders bevorzugt 2 - 9 nm oder 2.2 - 6 nm.

Der durchschnittliche Partikeldurchmesser kann durch Dynamische Lichtstreuung (DLS), insbesondere durch Photonenkreuzkorrelationsspektroskopie (PCCS), bevorzugt mit einem Gerät vom Typ NANOPHOX der Firma Sympatec GmbH (Deutschland), bestimmt. Unter dem durchschnittlichen Partikeldurchmesser wird vorliegend insbesondere der d₅₀-Wert verstanden.

Die Herstellung erfolgt z.B. durch Behandeln wässriger Alkalisilicat-Lösungen, auch Wasserglas genannt, mit Ionenaustauschern und Stabilisierung durch wenig Alkali. Silicasole sind im Handel erhältlich, z.B. die Levasile® von H.C. Stark oder die Bindzile® von AkzoNobel.

Unter dem Begriff Wasserglas werden aus dem Schmelzfluss erstarrte wasserlösliche Salze von Kieselsäuren, insbesondere Kalium- und Natriumsilicate, oder deren wässrige Lösungen verstanden. Diese werden z.B. in CD Römpp Chemie Lexikon, Version 1.0, Georg Thieme Verlag, Stuttgart 1995, beschrieben. Beispiele sind Natriumsilicate, Natriummetasilicate, Kaliumsilicate, Kaliummetasilicate und Mischungen davon und deren wässrige Lösungen.

Pyrogene Kieselsäure sind hochdisperse Kieselsäuren, die durch Flammenhydrolyse hergestellt werden können. Dabei wird Siliciumtetrachlorid in einer Knallgas-Flamme zersetzt. Gefällte Kieselsäure wird gewöhnlich aus einer wässrigen Alkalisilicat-Lösung durch Fällung mit Mineralsäuren hergestellt. Dabei bilden sich kolloidale Primärteilchen, die mit fortschreitender Reaktion agglomerieren und schliesslich zu Aggregaten verwachsen. Pyrogene Kieselsäuren und gefällte Kieselsäuren sind ebenfalls im Handel erhältlich.

Die Umsetzung der Calciumverbindung mit der Siliciumverbindung, insbesondere einem Silicasol, findet vorzugsweise in Gegenwart eines Lösungsmittels statt. Geeignete Lösungsmittel sind beispielsweise Wasser, Alkohole und/oder Polyalkohole, insbesondere Glykol, Glyzerin, Ethanol oder Isopropanol. Wasser ist dabei das am meisten bevorzugte Lösungsmittel.

Ein Anteil an Lösungsmittel, insbesondere Wasser, während der Umsetzung beträgt bevorzugt 25 - 95 Gew.-%, insbesondere 30 - 60 Gew.-%, insbesondere 35 - 50 Gew.-%, bezogen auf das Gewicht der gesamten Reaktionsmischung.

Insbesondere wird vor der Umsetzung die Calciumverbindung in Form einer die Calciumverbindung enthaltenden Lösung, insbesondere einer wässrigen die Calciumverbindung enthaltenden Lösung, vorgelegt. Die die Calciumverbindung enthaltende Lösung enthält dabei die Calciumverbindung, ein Lösungsmittel sowie optional weitere Substanzen. Als Lösungsmittel wird insbesondere Wasser verwendet. Eine Konzentration der Calciumverbindung in der Calciumlösung liegt mit Vorteil im Bereich von 5 - 80 Gew.-%, insbesondere 30 - 70 Gew.-%, weiter bevorzugt 40 - 60 Gew.-%.

Insbesondere verfügt die Calciumverbindung oder die Calciumlösung über einen pH von 2 - 10, bevorzugt 3 - 9, besonders bevorzugt 4 - 8, im Besonderen 5 - 7. Im Speziellen ist der pH der Calciumverbindung oder der Calciumlösung < 7.

Insbesondere findet daher die Umsetzung der Calciumverbindung **CV** mit der Siliciumverbindung, insbesondere dem Silicasol, in Gegenwart von Wasser, insbesondere in wässriger Lösung, statt. Die Umsetzung umfasst insbesondere eine Fällungsreaktion zwischen der Calciumverbindung und der Siliciumverbindung, bevorzugt dem Silicasol. Die Calciumverbindung wird mit der Siliciumverbindung, bevorzugt dem Silicasol, insbesondere zu einer Calciumsilikat-Hydrat-Suspension umgesetzt.
Die Umsetzung der Calciumverbindung mit der Siliziumverbindung erfolgt insbesondere bei einem pH von 2 - 12, insbesondere 2 - 8, bevorzugt 2.5 - 7, speziell 3 - 6.5, besonders bevorzugt 3 - 4.

Besonders bevorzugt erfolgt die Umsetzung der Calciumverbindung mit der Siliziumverbindung unter sauren Bedingungen. Vorteilhaft ist ein pH < 7, insbesondere < 6, bevorzugt < 5 oder < 4.

Falls erforderlich, kann der pH vor und/oder während der Umsetzung der Calciumverbindung mit der Siliziumverbindung durch Zugabe einer Säure und/oder Base auf den gewünschten Wert, insbesondere einen vorstehend genannten Wert, eingestellt werden.

Gemäss einer vorteilhaften Ausführungsform wird vor und/oder während der Umsetzung der pH durch Zugabe einer Säure eingestellt. Die Säure ist insbesondere eine organische Säure, bevorzugt eine Carbonsäure, insbesondere eine C₁ - C₄ Carbonsäure, bevorzugt Essigsäure und/oder Ameisensäure. Speziell bevorzugt ist Ameisensäure.

Bevorzugt erfolgt die Umsetzung der Calciumverbindung mit der Siliziumverbindung im Wesentlichen in Abwesenheit eines hydraulischen Bindemittels und/oder in Abwesenheit eines zementösen Bindemittels und/oder in Abwesenheit von Zement. Dies bedeutet insbesondere, dass ein Anteil derartiger Stoffe während der Umsetzung < 10 Gew.-%, bevorzugt < 5 Gew.-%, speziell < 1 Gew.-%, besonders bevorzugt < 0.5 Gew.-% oder < 0.1 Gew.-% ist. Im Speziellen liegen gar keine solche Stoffe während der Umsetzung vor. Insbesondere ist das Umsetzungsprodukt kein Zementklinker oder Zement.

Eine allfällige Vermischung mit derartigen Stoffen erfolgt insbesondere erst bei Verwendung des hergestellten Abbinde- und Erhärtungsbeschleunigers, welche insbesondere zeitlich verzögert und/oder räumlich getrennt von der Herstellung des Abbinde- und Erhärtungsbeschleunigers erfolgt.
Sofern Silicasol als Siliciumverbindung eingesetzt wird, weist dieses bevorzugt einen pH von 3 - 12, insbesondere von 7 - 12, besonders bevorzugt von 10 - 11, auf. Dies ist dahingehend von Vorteil, weil daraus in hydraulischen Bindemitteln sowohl eine hohe Druckfestigkeit, insbesondere eine hohe Druckfestigkeit nach 8 h, als auch ein hohes Ausbreitmass, insbesondere ein hohes Ausbreitmass nach 1 min, bei zugleich guter Stabilität des Beschleunigers resultiert.
Weist das Silicasol einen pH von 7 - 9 auf, ist dies der Erreichung einer besonders hohen Druckfestigkeit in hydraulischen Bindemitteln zuträglich.

Weist das Silicasol einen pH von 3 - 5 auf, ist dies der Erreichung eines vorteilhaften Ausbreitmasses in hydraulischen Bindemitteln zuträglich.

Wird ein Silicasol mit einem pH im Bereich von 7 - 12, besonders bevorzugt von 10 - 11 verwendet, ergeben sich besonders vorteilhafte Druckfestigkeiten und Verarbeitungseigenschaften von hydraulischen Zusammensetzungen. Zugleich wird eine besonders gute Stabilität des Beschleunigers erreicht.

Das Silicasol ist bevorzugt eine wässrige Lösung oder Suspension mit einem Gehalt an SiO₂ im Bereich von 3 - 30 Gew.-%, insbesondere 4 - 20 Gew.-%, insbesondere bevorzugt 10 - 18 Gew.-%.

Sofern eine andere Siliciumverbindung als Silicasol eingesetzt wird, wird diese ebenfalls bevorzugt als wässrige Lösung, wässriges Kolloid oder wässrige Dispersion eingesetzt, wobei der pH-Wert bevorzugt größer 8 ist. Nach Bedarf kann ein Base zugegeben werden, um den pH-Wert einzustellen.

Das Verhältnis von der mindestens einen Calciumverbindung zu der mindestens einen Siliciumverbindung wird gemäss einer ersten Ausführungsform bevorzugt so gewählt, dass das Molverhältnis von Silicium zu Calcium im Bereich von 0,1 bis 2,5, bevorzugter von 0,15 bis 2,3 liegt, um das Umsetzungsprodukt zu bilden. Diese Bereiche sind insbesondere vorteilhaft bei Verwendung eines Silicasols mit einem pH von 3 - 9, speziell einem pH von 3-5 oder 7 - 9.

Handelt es sich bei der Calciumverbindung um Calciumnitrat, so beträgt bei der ersten Ausführungsform das Molverhältnis von Silicium zu Calcium während der Umsetzung z.B. von 0,1 bis 2,5, bevorzugt von 0,15 bis 0,6, bevorzugter von 0,2 bis 0,4. Dies ist insbesondere zur Erreichung eines vorteilhaften Ausbreitmasses in hydraulischen Bindemitteln bei gleichzeitiger hoher Druckfestigkeit nach 8 Stunden vorteilhaft.

Handelt es sich bei der Calciumverbindung um Calciumsulfamat, so beträgt bei der ersten Ausführungsform das Molverhältnis von Silicium zu Calcium während der Umsetzung vorzugsweise 0,1 bis 2,5. Das Molverhältnis ist bevorzugt von 1,5 bis 2,5, insbesondere 2,0 bis 2,5, um eine hohen Druckfestigkeit nach 8 Stunden zu erreichen. Das Molverhältnis ist aber bevorzugt von 0,1 bis 1,5, insbesondere von 0,1 bis 0,5, um ein vorteilhaftes Ausbreitmaß in hydraulischen Bindemitteln zu erreichen.

Gemäss einer zweiten vorteilhaften Ausführungsform ist das molare Verhältnis von Si: Ca im Verlauf der Umsetzung kleiner als 0.1, insbesondere im Bereich von 0.005 - 0.095. Besonders bevorzugt liegt das molare Verhältnis von Si : Ca im Bereich von 0.01 - 0.08, vorzugsweise 0.03 - 0.06. Derartige Verhältnisse sind insbesondere vorteilhaft falls ein Silicasol mit einem pH im Bereich von 7 - 12, besonders bevorzugt von 10 - 11 verwendet wird.

Die Umsetzung der Calciumverbindung und der Siliciumverbindung erfolgt bevorzugt unter Rühren, insbesondere unter Rühren unter hoher Scherkraft, um der Reaktionsmischung mechanische Energie zuzuführen. Die Umsetzung zur Bildung des Umsetzungsprodukts findet bevorzugt in einem Flüssigphasen-Reaktor ausgewählt aus der Gruppe bestehend aus Sulzer-Mischer-Reaktor, Reaktor mit externer Rezirkulation, Kaskadenreaktor, Loop Reaktor, Rühr-Reaktor und Reaktor mit Rotor-Stator-Mischer statt. Bevorzugte Flüssigphasen-Reaktoren sind insbesondere Rühr-Reaktoren, Statikmischer und Reaktoren mit Rotor-Stator-Mischer.

Typischerweise wird die Umsetzung bei einer Temperatur von -10 - 90 °C, z.B. bei Raumtemperatur, durchgeführt.. Die Umsetzung wird ferner bevorzugt bei einem Druck von 0,8 bis 20 bar, z.B. bei Atmosphärendruck, durchgeführt.

Es ist vorteilhaft, wenn nach der Umsetzung der Calciumverbindung und der Siliciumverbindung ein Zerkleinerung des Umsetzungsproduktes erfolgt. Die Zerkleinerung kann z.B. in Rührwerksmühlen, Walzenstühlen, Kolloidmühlen, Rotor-Stator-Mischer und/oder Homogenisatoren, vorzugsweise durch Rotor-Stator-Mischer und/oder Homogenisatoren erfolgen. Naturgemäß kann die Umsetzung und Zerkleinerung des Umsetzungsprodukts in derselben Vorrichtung in einem Arbeitsgang durchgeführt werden. Die Zerkleinerung ist insbesondere für eine verbesserte Frühfestigkeit der mit dem Betonhilfsmittel behandelten Zusammensetzungen vorteilhaft.

Vorzugsweise liegt das Umsetzungsprodukt in Partikelform vor, insbesondere als in Form einer Dispersion oder kolloidalen Lösung, wobei es sich bevorzugt um wässrige Dispersionen oder wässrige kolloidale Lösungen handelt. Die durchschnittliche Partikelgrösse des Umsetzungsprodukts liegt z.B. im Bereich von 1000 bis 10 nm, vorzugsweise von 100 bis 10 nm. Die durchschnittliche Partikelgröße bezieht sich hier auf das Volumenmittel (d₅₀-Wert). Das Volumenmittel kann z.B. laseroptisch mit dynamischer Laserlichtstreuung bestimmt werden.

Bei dem Umsetzungsprodukt aus der mindestens einen Calciumverbindung und der mindestens einen Siliciumverbindung kann es sich um ein Calcium-silicat oder ein Calciumsilicathydrat handeln, das bevorzugt als wässrige Dispersion vorliegt.

Das Betonzusatzmittel kann ein oder mehrere weitere Additive enthalten. Die Additive können unabhängig voneinander vor, während oder nach der Umsetzung der mindestens einen Calciumverbindung und der mindestens einen Siliciumverbindung zugegeben werden.

Das Betonzusatzmittel kann z.B. als Additiv ferner mindestens ein Kammpolymer umfassen. Kammpolymere enthalten an einer linearen Hauptkette in mehr oder weniger regelmäßigen Abständen längere Seitenketten. Kammpolymere sind dem Fachmann bekannt. Sie werden als Fließmittel für hydraulische Bindemittel wie Zement in großem Umfang eingesetzt. Es handelt sich bevorzugt um ein wasserlösliches Kammpolymer. Das Kammpolymer wird vorzugsweise vor oder während der Umsetzung der mindestens einen Calciumverbindung und der mindestens einen Siliciumverbindung zugegeben.

Das Kammpolymer ist vorzugsweise ein Polycarboxylatether (PCE). Das "Rückgrat" des Kammes wird dabei aus einer Polycarbonsäure (Polycarboxylat) gebildet und die "Zähne" (Seitenketten) des Kamms aus Polyetherketten.

Dem Betonzusatzmittel kann als Additiv ferner eine Verbindung ausgewählt aus der Gruppe bestehend aus Aluminiumsalz, Aluminiumhydroxid, Aluminiumoxid, Magnesiumsalz, Magnesiumhydroxid und Magnesiumoxid, zugegeben werden; diese Salze sind insbesondere ausgewählt aus der Gruppe bestehend aus Nitraten und Nitriten. Dieses Additiv wird vorzugsweise vor oder während der Umsetzung der mindestens einen Calciumverbindung und der mindestens einen Siliciumverbindung zugegeben.

Es kann weiter vorteilhaft sein, N-Methyldiethanolamin zum Betonzusatzmittel zu geben, z.B. in einer Menge von 1 bis 10 Gew.-%, vorzugsweise von 2 bis 8 Gew.-% und bevorzugter von 4 bis 8 Gew.-%, bezogen auf das Gesamtgewicht des Betonzusatzmittels. Überraschenderweise wurde gefunden, dass sich dies vorteilhaft auf die Druckfestigkeit nach 8 Stunden auswirkt. Weiter wurde überraschenderweise gefunden, dass das N-Methyldiethanolamin die Lagerstabilität des Betonzusatzmittels verbessert.

Das Betonzusatzmittel kann auch ein Verdickungsmittel enthalten. Beispiele für geeignete Verdickungsmittel sind Celluloseether, Polysacharide, Stärkederivate, Polyvinylalkohole, Polyacrylamide und Polyacrylate, wobei Polyacrylate bevorzugt sind. Das Betonzusatzmittel kann auch ein Dispergiermittel enthalten, dies ist aber nicht erforderlich. Beispiele für geeignete Dispergiermittel sind Polycarboxylate, sulfonierte Melamin-Formaldehyd-Kondensate, sulfonierte Naphthalin-Formaldehyd-Kondensate, Ligninsulfonate und Polyoxyalkylene.

N-Methyldiethanolamin, Verdickungsmittel und/oder Dispergiermittel werden, sofern eingesetzt, vorzugsweise nach der Umsetzung der mindestens einen Calciumverbindung und der mindestens einen Siliciumverbindung zugegeben.

Das Betonzusatzmittel liegt bevorzugt in flüssiger Form vor, z.B. als Lösung, Sol oder Dispersion, in Wasser, einem organischen Lösungsmittel wie vorstehend definiert oder in einer Mischung von Wasser und organischem Lösungsmittel. Das Betonzusatzmittel liegt besonders bevorzugt als wässrige Lösung, wässriges Sol oder wässrige Dispersion vor.

Das Betonzusatzmittel kann aber auch in fester Form vorliegen, z.B. als Pulver, Schuppen, Pellets, Granulate oder Platten. In fester Form lässt es sich problemlos transportieren und lagern.

Die Zusatzmittelkombination wird für eine Zusammensetzung umfassend Zement verwendet. Zement ist ein anorganisches, hydraulisch wirkendes Bindemittel. Zur Herstellung von Zement wird Klinker bzw. Zementklinker entweder allein oder mit weiteren Hauptbestandteilen und/oder bis zu 5 Gew.-% Nebenbestandteilen fein gemahlen. Zur Regelung des Erstarrens wird ferner Calciumsulfat (Gips und/oder Anhydrit) zugesetzt.

Der Zement enthält bevorzugt einen Anteil von wenigstens 5 Gew.-%, insbesondere wenigstens 20 Gew.-%, bevorzugt wenigstens 35 Gew.-%, ganz besonders bevorzugt wenigstens 65 Gew.-% Zementklinker. Der Zementklinker ist bevorzugt ein Portlandzementklinker. Im Zement liegt der Zementklinker als vermahlener Zementklinker vor.

Als weitere Hauptbestandteile und/oder Nebenbestandteile zur Herstellung des Zements können latent hydraulische Bindemittel, puzzolanische Bindemittel und/oder inerte Stoffe zugesetzt werden. Beispiele sind Hüttensand oder Schlacken, Puzzolane, Flugaschen, gebrannte Schiefer, Kalksteine und Silicastaub. Somit kann Zement neben vermahlenem Zementklinker und Calciumsulfat ein oder mehrere weitere mineralische Bindemittel sowie inerte Stoffe enthalten, die beim Zementgewicht zu berücksichtigen sind.

Zemente werden gemäß der Zusammensetzung klassifiziert. Hierfür existieren unterschiedliche, teilweise länderspezifische Normen, z.B. die DIN EN 197-1, in der die Zemente bezüglich des Anteils an Zementklinker und, falls vorhanden, der Art und Menge weiterer Hauptbestandteile klassifiziert werden.

Die Zusatzmittelkombination gemäß der Erfindung ist für alle Zementtypen geeignet, insbesondere für Zement vom Typ CEM I, CEM II, CEM III/A und/oder CEM III/B gemäß der Norm EN 197-1. Ein besonders geeigneter Zement ist ein Zement vom Typ CEM II/A bzw. CEM II/B. Natürlich eignen sich auch entsprechende Zementtypen, die bezüglich einer anderen Norm klassifiziert sind.

Die Zusammensetzung kann neben dem Zement übliche Zusatzmittel enthalten. Beispiele sind Betonverflüssiger, Korrosionsinhibitoren, Fließmittel, Schwindreduzierer, Entschäumer oder Luftporenbildner. Desweiteren kann die Zusammensetzung übliche Zusatzstoffe enthalten, z.B. inaktive oder weitgehend inaktive Zusatzstoffe, wie Gesteinsmehl, z.B. Quarz- oder Kalksteinmehl, und Pigmente , puzzolanische oder latent hydraulische Zusatzstoffe, wie Flugaschen, Hüttensande, Silicastaub, Trass oder künstliche Puzzolane, und faserartige Zusatzstoffe. Weiterhin kann die Zusammensetzung übliche Zuschlagstoffe wie Sand, Kies und/oder Steine enthalten.

Bei der Zusammensetzung umfassend Zement handelt es sich vorzugsweise um einen Beton oder Mörtel.

Die Zusatzmittelkombination beinhaltet zwei gesonderte Komponenten, nämlich zum einen das Mahlhilfsmittel und zum anderen das Betonzusatzmittel. Die gesonderten Komponenten werden vorzugsweise zu verschiedenen Zeitpunkten zu der Zusammensetzung umfassend Zement oder einer Vorstufe davon gegeben. Durch die Zugabe der Kombination aus Mahlhilfsmittel und Betonzusatzmittel wird bei Zugabe von Wasser zur Zusammensetzung umfassend Zement eine überraschend schnelle Zementhydratation und dadurch eine starke Erstarrungs- bzw. Erhärtungsbeschleunigung erreicht.

Das Mahlhilfsmittel wird vorzugsweise zum Klinker gegeben, um den Klinker in Anwesenheit des Mahlhilfsmittels zu Zement zu vermahlen. Das Mahlhilfsmittel kann z.B. einfach mit dem Klinker vermischt oder in flüssiger Form auf den Klinker gesprüht werden. In einer weiteren möglichen Ausführungsform wird das Mahlhilfsmittel mit dem bereits gemahlenen Zement gemischt.

Das Betonzusatzmittel wird der Zusammensetzung umfassend Zement und das Mahlhilfsmittel bevorzugt mit oder kurz vor oder kurz nach der Zugabe des Anmachwassers beigegeben. Als besonders geeignet hat sich hierbei die Zugabe des Betonzusatzmittels in Form einer wässrigen Lösung oder Dispersion erwiesen, insbesondere als Anmachwasser oder als Teil des Anmachwassers oder als Teil eines flüssigen Zusatzmittels, welches mit dem Anmachwasser zu der Zusammensetzung umfassend Zement gegeben wird.

Das Betonzusatzmittel kann alternativ im festem Aggregatzustand zu einem Zement oder einer Zusammensetzung umfassend Zement gegeben und damit vermischt werden. Es werden dann Zementzusammensetzungen, eine sogenannte Trockenmischung, erhalten, die über längere Zeit lagerfähig ist und typischerweise in Säcken abgepackt oder in Silos gelagert werden kann.

In einer anderen Ausführungsform kann das Betonzusatzmittel in flüssiger Form auf den gemahlenen Zement oder die Zusammensetzung umfassend Zement aufgesprüht werden. Der Zement oder die Zusammensetzung umfassend Zement kann so z.B. teilweise mit dem Betonzusatzmittel beschichtet werden.

Die beiden zuletzt genannten Alternativen ermöglicht die Herstellung eines Zements oder einer Zusammensetzung umfassend Zement, welche bereits eine Kombination des Mahlhilfsmittels und des Betonzusatzmittels enthalten und so als Fertigmischung, z.B. als sogenannten Schnellzement, gelagert und verkauft werden kann. Dieser Zement weist nach Zugabe des Anmachwassers die gewünschten Eigenschaften des schnellen Abbindens und der hohen Frühfestigkeit auf, ohne dass zusätzlich zum Anmachwasser auf der Baustelle ein weiteres Zusatzmittel zugefügt werden muss.

Die Menge an Mahlhilfsmittel und Betonzusatzmittel die zur Zusammensetzung umfassend Zement zugegeben werden können in weiten Bereichen variieren. Das Mahlhilfsmittel wird z.B. in einer solchen Menge zudosiert wird, dass der Anteil des Mahlhilfsmittels im Bereich von 0,001 Gew.-% bis 1,0 Gew.-%, bevorzugt von 0,01 Gew.-% bis 0,5 Gew.-% und bevorzugter von 0,02 Gew.-% bis 0,3 Gew.-%, bezogen auf das Zementgewicht, liegt.

Das Betonzusatzmittel wird z.B. in einer solchen Menge zudosiert wird, dass der Anteil des Betonzusatzmittels im Bereich von 0,01 Gew.-% bis 30,0 Gew.-% , bevorzugt von 0,2 Gew.-% bis 6,0 Gew.-% und besonders bevorzugt von 0,5 Gew.-% bis 4,0 Gew.-% bezogen auf das Zementgewicht, liegt.

Dementsprechend betrifft die Erfindung auch ein Verfahren zur Herstellung eines Bauteils aus einer Zusammensetzung umfassend Zement mit beschleunigter Zementhydratation, umfassend
a) Mahlen von Klinker zu Zement, und gegebenenfalls Zugabe von Zusatzmitteln, Zusatzstoffen und/oder Zuschlagstoffen zum Zement, um eine Zusammensetzung umfassend Zement zu erhalten,
b) Vermischen der Zusammensetzung umfassend Zement mit Anmachwasser, um einen Frischmörtel oder Frischbeton zu erhalten,
c) Einbau des Frischmörtels oder Frischbetons auf eine Unterlage oder in eine Schalung und gegebenenfalls Verdichten, und
d) Erstarren und Aushärten des Frischmörtels oder Frischbetons und gegebenenfalls Ausschalung, um das Bauteil zu erhalten,
wobei in einem der Schritte a) und/oder b) das Mahlhilfsmittel und das Betonzusatzmittel wie vorstehend definiert unabhängig voneinander zugegeben werden.

Geeignete Mengen an Mahlhilfsmittel und Betonzusatzmittel im Verhältnis zur Zusammensetzung umfassend Zement sowie geeignete Arten und Zeitpunkte zur Zugabe von Mahlhilfsmittel und Betonzusatzmittel zur Zusammensetzung umfassend Zement wurden bereits vorstehend erläutert.

Es ist bevorzugt, das Mahlhilfsmittel zum Klinker zu geben, um den Klinker in Anwesenheit des Mahlhilfsmittels zum Zement zu vermahlen, oder das Mahlhilfsmittel mit dem Zement zu vermahlen, um einen modifizierten Zement zu erhalten, der für die Zusammensetzung umfassend den Zement eingesetzt werden kann.

Das Betonzusatzmittel wird bevorzugt zum Anmachwasser gegeben oder als Anmachwasser verwendet, insbesondere wenn es in flüssiger Form vorliegt. Das Betonzusatzmittel kann alternativ gesondert vor, während oder nach der Zugabe des Anmachwassers zur Zusammensetzung umfassend Zement gegeben werden.

Bei dem Bauteil kann es sich um einen Boden- oder Wandbelag, eine Wand oder irgendein anderes Bauteil, z.B. von einem Bauwerk, handeln. Natürlich können in das Bauteil zusätzliche Bestandteile eingebaut werden, z.B. eine Stahlarmierung. Das Verfahren ist besonders geeignet zur Herstellung von Betonfertigteilen. Als Schalung wird bevorzugt eine Bauteilform verwendet, wobei das nach der Ausschalung erhaltene Bauteil bevorzugt ein Betonfertigteil ist.

Mit der vorliegenden Erfindung wird eine Kombination aus Mahlhilfsmittel und Betonzusatzmittel bereitgestellt, welche den Abbinde- und Erhärtungsprozess von Zement und diese umfassende Zusammensetzungen stark beschleunigt ohne sich negativ auf die Verarbeitungszeiten, die Festigkeitsentwicklung oder die Dauerhaftigkeit der damit hergestellten Bauteile, insbesondere Mörtel- oder Betonbauteile, auszuwirken. Der Einsatz der erfindungsgemäßen Kombination ist somit besonders geeignet, wenn die hydraulisch abbindende Zusammensetzung sehr schnell nach der Applikation ausgeschalt werden soll oder belastbar oder begehbar sein muss, z.B. im Strassen- oder Brückenbau, bei der Vorfabrikation von Betonelementen bei Beton- und Stahlbetonfertigteilen oder bei Pistensanierungen, insbesondere bei Flugpisten. Durch Einsatz der erfindungsgemäßen Kombination können die Fertigteile bereits nach wenigen Stunden entschalt, transportiert, gestapelt oder vorgespannt werden oder die Fahrbahnen oder Pisten befahren werden.

Die Kombination des Mahlhilfsmittels und des Betonzusatzmittels wie vorstehend definiert eignen sich somit zur Verwendung in einer Zusammensetzung umfassend Zement als Erhärtungsbeschleuniger zur Beschleunigung der Zementhydratation bei Zugabe von Wasser.

### Beispiele

Die Erfindung wird durch nachstehende Beispiele weiter erläutert, die die Erfindung aber in keiner Weise einschränken sollen. Sofern nicht anders angegeben, beziehen sich alle Angaben auf das Gewicht.

### Mahlhilfsmittel (MH)

Ein Mahlhilfsmittel MH wird durch Mischen der in der nachstehenden Tabelle aufgeführten Komponenten in den angegebenen Anteilen erhalten.

| | Gew.-Teile |
|---|---|
| Wasser | 63,2 |
| Calciumchlorid | 15,1 |
| Triethanolamin | 10,4 |
| Diethylenglykol | 6,80 |
| Essigsäure | 4,00 |
| Entschäumer | 0,30 |
| Biozid* | 0,20 |

| | |
|---|---|
| *Acticide® von Thor GmbH | |

### Betonzusatzmittel 1 (BZM1)

Es wurden 47.4 Gew.-% Ca(NO₃)₂ x 4 H₂O (von Yara GmbH & Co., Deutschland), 6.0 Gew.-% Methyl-Diethanolamin in 11.9 Gew.-% Wasser gelöst und in einem 2 Liter Becher vorgelegt. Danach wurden 34.7 Gew.-% Cembinder®110 (Silicasol von AkzoNobel, Schweden: Partikelgröße 2,5 nm, pH 6, kolloidal gelöste Polykieselsäure-Moleküle mit 7,2 % SiO₂-Gehalt) innerhalb einer Stunde zugegeben. Der Inhalt des 2 Liter Bechers wurde unter Verwendung von einem Flügelrührer (RW 20.n, Ika Labortechnik) mit Flügelrührerdurchmesser 5 cm, mit 500 bis 2000 U/min während der Zugabe von Cembinder®110 sowie für weitere 15 min gerührt. Danach wurde mit einem Rotor-Stator-Mischer (PT2100, Polytron, Kinematica, Schweiz) 30 Sekunden lang homogenisiert. Nach dem Mischen mit dem Rotor-Stator-Mischer wurde nochmals 15 Minuten mit ein Flügelrührer gerührt. Der pH von Cembinder®110 betrug 6,0.

Auf diese Weise wurde eine wässrige Dispersion eines Umsetzungsprodukts der Calciumverbindung und des Silicasols hergestellt. Das Molverhältnis Si:Ca in den Ausgangskomponenten war 0.31. Sämtliche Gew.-% sind jeweils bezogen auf das Gesamtgewicht des Beschleunigers.

### Betonzusatzmittel 2 (BZM2)

Es wurden 70.8 Gew.-% Ca(NO₃)₂ (50 Gew.-% in H₂O, Yara GmbH & Co., Deutschland), 9.8 Gew.-% Natrium-Thiosulfat, 6.4 Gew.-% MethylDiethanolamin in 4.8 Gew.-% Wasser gelöst und in einem 2 Liter Becher vorgelegt. Danach wurde 4.9 Gew.-% Silicasol (Cembinder® 2509, Partikelgrösse 5 nm, pH 10.5, kolloidal gelöste Polykieselsäure-Moleküle mit 15.4 Gew.-% SiO₂ Gehalt) innerhalb 15 Minuten zugegeben und der pH-Wert mit 3.3 Gew.-% Ameisensäure auf einen Wert von 3.8 eingestellt. Der Anteil an Wasser betrug ca. 44 Gew.-% und das Verhältnis von Silicium : Calcium 0.058. Sämtliche Gewichtsangaben beziehen sich jeweils auf das Gesamtgewicht des Beschleunigers. Der Inhalt des 2 Liter Bechers wurde unter Verwendung eines Flügelrührers (RW 20.n, Ika Labortechnik) mit Flügelrührerdurchmesser 5 cm, mit 500 bis 1'000 Umdrehungen pro Minute während der Zugabe des Silcasols sowie für weitere 5 min gerührt.

Der pH während der Umsetzung lag durchwegs im Bereich von 3.8 - 3.9.

Bei BZM2 handelt es sich um eine sehr feinteilige Calciumsilikat-Hydrat enthaltende Suspension.

### Mörtelmischung

Die Wirksamkeit der Zusatzmittelkombination wurde an einem Standardmörtel nach EN 196-1 folgender Zusammensetzung geprüft:

| | |
|---|---|
| | |
| Portlandzement (CEM I 42.5N) | 450 g |
| Normensand 0-4 mm | 1350 g |
| Wasser | 225 g |

Als Zement wurde eine Gemisch bestehend aus gleichen Gewichtsteilen der drei Schweizer Zementsorten CEM I 42.5N Holcim (Siggenthal), CEM I 42.5N Vigier und CEM I 42.5N Jura Cement (Wildegg) verwendet, welches eine Feinheit nach Blaine von ca. 3400 cm²/g aufwies.

### Prüfung

Es wurden Druckfestigkeiten für die oben genannte Mörtelmischung 8h, 12h, 24h bzw. 48h nach Zugabe des Anmachwassers bestimmt. Die Prüfung zur Bestimmung der Druckfestigkeit (in MPa) erfolgte mittels Prismen (40 x 40 x 160mm) gemäß EN 196-1.

### Verarbeitung

Die Mischprozedur wurde analog der Norm EN 196 durchgeführt. Die Prozedur wurde mehrmals wiederholt, wobei kein Additiv zugesetzt oder nur das Mahlhilfsmittel (MH), nur das Betonzusatzmittel (BZM1 oder BZM2) bzw. die Zusatzmittelkombination aus MH und BZM1 oder BZM2 hinzugefügt wurden. Dabei wurde das Mahlhilfsmittel, wenn eingesetzt, vor der Vermischung der Komponenten der Mörtelmischung mit dem Zement vermahlen und der so modifizierte Zement für die Mörtelmischung verwendet. Wenn das Betonzusatzmittel eingesetzt wurde, wurde es im Anmachwasser gelöst oder dispergiert und mit dem Anmachwasser in die Mörtelmischung gegeben.

Die eingesetzten Mengen an Mahlhilfsmittel bzw. an Betonzusatzmittel sind in nachstehenden Tabellen aufgeführt und in Gew.-% bezogen auf das Zementgewicht angegeben.

Es wurden zwei Varianten getestet. In Variante A betrug der Wasser/Zement-Wert (w/z-Wert) 0,5 (analog EN 196). In Variante B wurde von der Normzusammensetzung des Mörtels abgewichen und der Wasser/Zement-Wert (w/z-Wert) betrug 0,4. Zusätzlich wurde in Variante B den Mörteln noch 1 Gew.-% (bezogen auf das Zementgewicht) eines Verflüssigers (Sika ViscoCrete® 1020X, erhältlich bei Sika Deutschland GmbH) zugegeben, um die Verarbeitbarkeit der Mörtelmischungen zu verbessern.

In den nachfolgenden Tabellen sind die Ergebnisse zusammengestellt (alle Prozentangaben sind Gew.-% bezogen auf das Zementgewicht):

**Variante A**

| | 1 | 2 | 3 | 4 | 5 | 6 |
|---|---|---|---|---|---|---|
| MH | - | - | - | 0,3% | 0,3% | 0,3% |
| BZM1 | - | 4,0% | - | - | 4,0% | - |
| BZM2 | - | - | 4,0% | - | - | 4,0% |
| Druckfestigkeit | [MPa] | [MPa] | [MPa] | [MPa] | [MPa] | [MPa] |
| 8 h | 1,4 | 3,1 | 3,8 | 3,2 | 5,2 | 6,2 |
| 12 h | 4,9 | 9,5 | 11,2 | 9,5 | 9,4 | 14,5 |
| 24 h | 19,7 | 19,2 | 25,0 | 23,4 | 21,4 | 27,0 |
| 48 h | 30,5 | 33,7 | 35,3 | 32,7 | 33,9 | 36,9 |

**Variante B**

| | 1 | 2 | 3 | 4 | 5 | 6 |
|---|---|---|---|---|---|---|
| MH | - | - | - | 0,3% | 0,3% | 0,3% |
| BZM1 | - | 4,0% | - | - | 4,0% | - |
| BZM2 | - | - | 4,0% | - | - | 4,0% |
| Druckfestigkeit | [MPa] | [MPa] | [MPa] | [MPa] | [MPa] | [MPa] |
| 8 h | 0,5 | 2,5 | 6,1 | 1,8 | 5,7 | 9,5 |
| 12 h | 3,5 | 13,1 | 20,4 | 12,4 | 14,2 | 24,7 |
| 24 h | 31,3 | 37,4 | 40,5 | 38,0 | 39,7 | 42,2 |
| 48 h | 53,1 | 59,2 | 53,8 | 53,3 | 57,4 | 55,0 |

Bei Einsatz der Zusatzmittelkombination zeigt sich eine deutliche Verbesserung der Druckfestigkeit, insbesondere nach 8 h, im Vergleich zu den gleichen Komponenten, wenn sie einzeln eingesetzt werden. Es handelt sich um eine synergistische Wirkung, die nicht durch additive Effekte der einzelnen Komponenten erklärbar ist.

## Patentansprüche

1. Zusatzmittelkombination aus einem Mahlhilfsmittel und einem Betonzusatzmittel für eine Zusammensetzung umfassend Zement zur Beschleunigung der Zementhydratation, wobei
das Mahlhilfsmittel mindestens einen Aminoalkohol und mindestens eine die Zementhydratation beschleunigende Substanz ausgewählt aus einem Chlorid, einem Thiocyanat oder einer Kombination von einem Chlorid und einem Thiocyanat umfasst, und
das Betonzusatzmittel ein Umsetzungsprodukt aus mindestens einer Calciumverbindung mit mindestens einer Siliciumverbindung ausgewählt aus einer Siliciumdioxidverbindung, einer Kieselsäureverbindung und einer Silicatverbindung umfasst.

2. Zusatzmittelkombination nach Anspruch 1, wobei der mindestens eine Aminoalkohol Triethanolamin ist.

3. Zusatzmittelkombination nach Anspruch 1 oder Anspruch 2, wobei das Mahlhilfsmittel ferner mindestens ein Glykol umfasst, wobei das Glykol bevorzugt aus Diethylenglykol, Propylenglykol und Dipropylenglykol ausgewählt ist.

4. Zusatzmittelkombination nach irgendeinem der Ansprüche 1 bis 3, wobei die mindestens eine Siliciumverbindung ein Silicasol, Wasserglas, pyrogene Kieselsäure oder gefällte Kieselsäure ist.

5. Zusatzmittelkombination nach irgendeinem der Ansprüche 1 bis 4, wobei das Betonzusatzmittel ferner mindestens ein Kammpolymer umfasst, wobei das Kammpolymer vorzugsweise ein Polycarboxylatether ist.

6. Zusatzmittelkombination nach irgendeinem der Ansprüche 1 bis 5, wobei das Mahlhilfsmittel 10 bis 40 Gew.-% der mindestens einen die Zementhydratation beschleunigenden Substanz, 2 bis 40 Gew.-% mindestens eines Aminoalkohols und 0 bis 25 Gew.-%, bevorzugt 2 bis 25 Gew.-%, mindestens eines Glykols, bezogen auf das Gewicht des Mahlhilfsmittels, enthält, wobei das Mahlhilfsmittel bevorzugt 5 bis 25 Gew.-% eines oder mehrerer Alkali- und/oder Erdalkalichloride, 5 bis 25 Gew.-% eines oder mehrerer Alkali- und/oder Erdalkalithiocyanate, 2 bis 30 Gew.-% eines oder mehrerer Aminoalkohole, bevorzugt Triethanolamin, und 0 bis 25 Gew.-%, bevorzugt 2 bis 25 Gew.-% eines oder mehrerer Glykole, bevorzugt Diethylenglykol, bezogen auf das Gewicht des Mahlhilfsmittels, enthält.

7. Zusatzmittelkombination nach irgendeinem der Ansprüche 1 bis 6, wobei das Verhältnis von der mindestens einen Calciumverbindung zu der mindestens einen Siliciumverbindung so gewählt wird, dass das Molverhältnis von Calcium zu Silicium im Bereich von 0,1 bis 2,5 liegt, um das Umsetzungsprodukt zu bilden, und/oder wobei die Umsetzung der Calciumverbindung mit der Siliciumverbindung in Gegenwart eines Lösungsmittels, insbesondere Wasser, stattfindet, um das Umsetzungsprodukt zu bilden.

8. Verfahren zur Herstellung eines Bauteils aus einer Zusammensetzung umfassend Zement mit beschleunigter Zementhydratation, umfassend
a) Mahlen von Klinker zu Zement, und gegebenenfalls Zugabe von Zusatzmitteln, Zusatzstoffen und/oder Zuschlagstoffen zum Zement, um eine Zusammensetzung umfassend Zement zu erhalten,
b) Vermischen der Zusammensetzung umfassend Zement mit Anmachwasser, um einen Frischmörtel oder Frischbeton zu erhalten,
c) Einbau des Frischmörtels oder Frischbetons auf eine Unterlage oder in eine Schalung und gegebenenfalls Verdichten, und
d) Erstarren und Aushärten des Frischmörtels oder Frischbetons und gegebenenfalls Ausschalung, um das Bauteil zu erhalten,
wobei in einem der Schritte a) und/oder b) ein Mahlhilfsmittel und ein Betonzusatzmittel unabhängig voneinander zugegeben werden, wobei
das Mahlhilfsmittel mindestens einen Aminoalkohol und mindestens eine die Zementhydratation beschleunigende Substanz ausgewählt aus einem Chlorid, einem Thiocyanat oder einer Kombination von einem Chlorid und einem Thiocyanat umfasst, und
das Betonzusatzmittel ein Umsetzungsprodukt aus mindestens einer Calciumverbindung mit mindestens einer Siliciumverbindung ausgewählt aus einer Siliciumdioxidverbindung, einer Kieselsäureverbindung und einer Silicatverbindung umfasst.

9. Verfahren nach Anspruch 8, wobei das Mahlhilfsmittel in einer solchen Menge zudosiert wird, dass der Anteil des Mahlhilfsmittels im Bereich von 0,02 Gew.-% bis 1,0 Gew.-%, bezogen auf das Zementgewicht, liegt, und/oder das Betonzusatzmittel in einer solchen Menge zudosiert wird, dass der Anteil des Betonzusatzmittels im Bereich von 0.01 Gew.-% bis 30 Gew.-%, bezogen auf das Zementgewicht, liegt.

10. Verfahren nach Anspruch 8 oder Anspruch 9, wobei
das Mahlhilfsmittel zum Klinker gegeben wird, um den Klinker in Anwesenheit des Mahlhilfsmittels zum Zement zu vermahlen, oder das Mahlhilfsmittel mit dem Zement vermahlen wird, und/oder
das Betonzusatzmittel zum Anmachwasser gegeben wird, um das Anmachwasser enthaltend das Betonzusatzmittel in die Zusammensetzung umfassend Zement zu mischen, oder das Betonzusatzmittel gesondert vor, während oder nach der Zugabe des Anmachwassers zur Zusammensetzung umfassend Zement gegeben wird.

11. Verfahren nach irgendeinem der Ansprüche 8 bis 10, wobei als Schalung eine Bauteilform verwendet wird und das nach der Ausschalung erhaltene Bauteil ein Betonfertigteil ist.

12. Verfahren nach irgendeinem der Ansprüche 8 bis 11, wobei das Mahlhilfsmittel und/oder das Betonzusatzmittel wie in irgendeinem der Ansprüche 2 bis 7 definiert sind.

13. Verwendung einer Kombination von einem Mahlhilfsmittel und einem Betonzusatzmittel in einer Zusammensetzung umfassend Zement als Erhärtungsbeschleuniger zur Beschleunigung der Zementhydratation bei Zugabe von Wasser, wobei
das Mahlhilfsmittel mindestens einen Aminoalkohol und mindestens eine die Zementhydratation beschleunigende Substanz ausgewählt aus einem Chlorid, einem Thiocyanat oder einer Kombination von einem Chlorid und einem Thiocyanat umfasst, wobei das Mahlhilfsmittel gegebenenfalls ferner ein oder mehrere Zementadditive, z.B. Glycolverbindungen, Polymerverbindungen oder Entschäumer, umfasst, und
das Betonzusatzmittel ein Umsetzungsprodukt aus mindestens einer Calciumverbindung mit mindestens einer Siliciumverbindung ausgewählt aus einer Siliciumdioxidverbindung, einer Kieselsäureverbindung und einer Silicatverbindung umfasst.

14. Verwendung nach Anspruch 13, wobei das Mahlhilfsmittel und/oder das Betonzusatzmittel wie in irgendeinem der Ansprüche 2 bis 7 definiert ist.

## Claims

1. Admixture combination of a grinding aid and a concrete admixture for a composition comprising cement for accelerating cement hydration, where
the grinding aid comprises at least one amino alcohol and at least one cement hydration accelerator selected from a chloride, a thiocyanate, or a combination of a chloride and a thiocyanate, and
the concrete admixture comprises a reaction product of at least one calcium compound with at least one silicon compound selected from a silicon dioxide compound, a silicic acid compound, and a silicate compound.

2. Admixture combination according to Claim 1, the at least one amino alcohol being triethanolamine.

3. Admixture combination according to Claim 1 or Claim 2, the grinding aid further comprising at least one glycol, the glycol being preferably selected from diethylene glycol, propylene glycol, and dipropylene glycol.

4. Admixture combination according to any of Claims 1 to 3, the at least one silicon compound being a silica sol, waterglass, fumed silica, or precipitated silica.

5. Admixture combination according to any of Claims 1 to 4, the concrete admixture further comprising at least one comb polymer, the comb polymer being preferably a polycarboxylate ether.

6. Admixture combination according to any of Claims 1 to 5, the grinding aid comprising 10 to 40 wt% of the at least one cement hydration accelerator, 2 to 40 wt% of at least one amino alcohol, and 0 to 25 wt%, preferably 2 to 25 wt%, of at least one glycol, based on the weight of the grinding aid, and the grinding aid comprising preferably 5 to 25 wt% of one or more alkali and/or alkaline earth chlorides, 5 to 25 wt% of one or more alkali and/or alkaline earth thiocyanates, 2 to 30 wt% of one or more amino alcohols, preferably triethanolamine, and 0 to 25 wt%, preferably 2 to 25 wt%, of one or more glycols, preferably diethylene glycol, based on the weight of the grinding aid.

7. Admixture combination according to any of Claims 1 to 6, the ratio of the at least one calcium compound to the at least one silicon compound being selected such that the molar ratio of calcium to silicon is in the range from 0.1 to 2.5 in order to form the reaction product, and/or the reaction of the calcium compound with the silicon compound taking place in the presence of a solvent, more particularly water, in order to form the reaction product.

8. Method for producing a component from a composition comprising cement with accelerated cement hydration, comprising
a) grinding clinker to cement, and optionally adding admixtures, additives and/or aggregates to the cement in order to obtain a composition comprising cement,
b) mixing the composition comprising cement with tempering water, in order to obtain a fresh mortar or fresh concrete,
c) installing the fresh mortar or fresh concrete onto a substrate or into shuttering, and optionally compacting it, and
d) solidifying and hardening the fresh mortar or fresh concrete, and optionally deshuttering, in order to obtain the component,
where in one of the steps a) and/or b) a grinding aid and a concrete admixture are added independently of one another, where
the grinding aid comprises at least one amino alcohol and at least one cement hydration accelerator selected from a chloride, a thiocyanate, or a combination of a chloride and a thiocyanate, and
the concrete admixture comprises a reaction product of at least one calcium compound with at least one silicon compound selected from a silicon dioxide compound, a silicic acid compound, and a silicate compound.

9. Method according to Claim 8, the grinding aid being metered in an amount such that the fraction of the grinding aid is in the range from 0.02 wt% to 1.0 wt%, based on the cement weight, and/or the concrete admixture is metered in an amount such that the fraction of the concrete admixture is in the range from 0.01 wt% to 30 wt%, based on the cement weight.

10. Method according to Claim 8 or Claim 9, where
the grinding aid is added to the clinker, in order for the clinker to be ground to cement in the presence of the grinding aid, or the grinding aid is ground with the cement, and/or
the concrete admixture is added to the tempering water, in order for the tempering water comprising the concrete admixture to be mixed into the composition comprising cement, or the concrete admixture is added separately before, during, or after the addition of the tempering water to the composition comprising cement.

11. Method according to any of Claims 8 to 10, wherein a component mold is used as the shuttering and the component obtained after deshuttering is a precast concrete unit.

12. Method according to any of Claims 8 to 11, the grinding aid and/or the concrete admixture being as defined in any of claims 2 to 7.

13. Use of a combination of a grinding aid and a concrete admixture in a composition comprising cement as hardening accelerator for accelerating cement hydration on addition of water, where
the grinding aid comprises at least one amino alcohol and at least one cement hydration accelerator selected from a chloride, a thiocyanate, or a combination of a chloride and a thiocyanate, the grinding aid optionally further comprising one or more cement additives, e.g., glycol compounds, polymer compounds, or defoamers, and
the concrete admixture comprises a reaction product of at least one calcium compound with at least one silicon compound selected from a silicon dioxide compound, a silicic acid compound, and a silicate compound.

14. Use according to Claim 13, the grinding aid and/or the concrete admixture being as defined in any of Claims 2 to 7.

## Revendications

1. Combinaison d'adjuvants composée d'un adjuvant de broyage et d'un adjuvant pour béton destinée à une composition comprenant du ciment, pour l'accélération de l'hydratation du ciment,
l'adjuvant de broyage comprenant au moins un aminoalcool et au moins une substance accélérant l'hydratation du ciment choisie parmi un chlorure, un thiocyanate ou une combinaison d'un chlorure et d'un thiocyanate et
l'adjuvant pour béton comprenant un produit de réaction d'au moins un composé de calcium avec au moins un composé de silicium choisi parmi un composé de dioxyde de silicium, un composé de silice et un composé de silicate.

2. Combinaison d'adjuvants selon la revendication 1, ledit au moins un aminoalcool étant la triéthanolamine.

3. Combinaison d'adjuvants selon la revendication 1 ou la revendication 2, l'adjuvant de broyage comprenant en outre au moins un glycol, le glycol étant préférablement choisi parmi le diéthylèneglycol, le propylèneglycol et le dipropylèneglycol.

4. Combinaison d'adjuvants selon l'une quelconque des revendications 1 à 3, ledit au moins un composé de silicium étant un sol de silice, un verre soluble, une silice pyrogénée ou une silice précipitée.

5. Combinaison d'adjuvants selon l'une quelconque des revendications 1 à 4, l'adjuvant pour béton comprenant en outre un polymère en peigne, le polymère en peigne étant préférablement un éther de polycarboxylate.

6. Combinaison d'adjuvants selon l'une quelconque des revendications 1 à 5, l'adjuvant de broyage contenant 10 jusqu'à 40% en poids de ladite au moins une substance accélérant l'hydratation du ciment, 2 jusqu'à 40% en poids d'au moins un aminoalcool et 0 jusqu'à 25% en poids, préférablement 2 jusqu'à 25% en poids, d'au moins un glycol, par rapport au poids de l'adjuvant de broyage, l'adjuvant de broyage contenant préférablement 5 jusqu'à 25% en poids d'un ou plusieurs chlorure(s) alcalin(s) ou alcalino-terreux, 5 jusqu'à 25% en poids d'un ou plusieurs thiocyanate(s) alcalin(s) ou alcalino-terreux, 2 jusqu'à 30% en poids d'un ou plusieurs aminoalcool(s), préférablement la triéthanolamine et 0 jusqu'à 25% en poids, préférablement 2 jusqu'à 25% en poids d'un ou plusieurs glycol(s) préférablement le diéthylèneglycol, par rapport au poids de l'adjuvant de broyage.

7. Combinaison d'adjuvants selon l'une quelconque des revendications 1 à 6, le rapport dudit au moins un composé de calcium audit au moins un composé de silicium étant choisi de sorte que le rapport molaire de calcium à silicium se situe dans la plage de 0,1 jusqu'à 2,5, afin de former le produit de réaction et/ou la réaction du composé de calcium avec le composé de silicium étant mise en oeuvre en présence d'un solvant, en particulier d'eau, afin de former le produit de réaction.

8. Procédé pour la préparation d'un élément à partir d'une composition comprenant du ciment présentant une hydratation accélérée du ciment, comprenant
a) le broyage de clinker en ciment et éventuellement l'ajout d'adjuvants, d'additifs et/ou d'agrégats au ciment, afin d'obtenir une composition comprenant du ciment,
b) le mélange de la composition comprenant du ciment avec de l'eau de gâchage, pour obtenir un mortier frais ou un béton frais,
c) la coulée du mortier frais ou du béton frais sur un support ou dans un coffrage et éventuellement le compactage et
d) la solidification et le durcissement du mortier frais et du béton frais et éventuellement le décoffrage pour obtenir l'élément,
un adjuvant de broyage et un adjuvant pour béton étant ajoutés indépendamment l'un de l'autre dans l'une des étapes a) et/ou b),
l'adjuvant de broyage comprenant au moins un aminoalcool et comprenant au moins une substance accélérant l'hydratation du ciment choisie parmi un chlorure, un thiocyanate ou un combinaison d'un chlorure et d'un thiocyanate et
l'adjuvant pour béton comprenant un produit de réaction d'au moins un composé de calcium avec au moins un composé de silicium choisi parmi un composé de dioxyde de silicium, un composé de silice et un composé de silicate.

9. Procédé selon la revendication 8, l'adjuvant de broyage étant ajouté en une quantité telle que la proportion d'adjuvant de broyage se situe dans la plage de 0,02% en poids jusqu'à 1,0% en poids par rapport au poids du ciment et/ou l'adjuvant pour béton étant ajouté en une quantité telle que la proportion d'adjuvant pour béton se situe dans la plage de 0,01% en poids jusqu'à 30% en poids par rapport au poids du ciment.

10. Procédé selon la revendication 8 ou la revendication 9,
l'adjuvant de broyage étant ajouté au clinker, afin de moudre le clinker en ciment en présence de l'adjuvant de broyage ou bien l'adjuvant de broyage étant moulu avec le ciment et/ou
l'adjuvant pour béton étant ajouté à l'eau de gâchage, afin de mélanger l'eau de gâchage contenant l'adjuvant pour béton dans la composition comprenant du ciment ou bien l'adjuvant pour béton étant ajouté séparément avant, pendant ou après l'ajout de l'eau de gâchage à la composition comprenant du ciment.

11. Procédé selon l'une quelconque des revendications 8 à 10, un moule d'élément étant utilisé en tant que coffrage et l'élément obtenu après décoffrage étant un élément en béton préfabriqué.

12. Procédé selon l'une quelconque des revendications 8 à 11, l'adjuvant de broyage et/ou l'adjuvant pour béton étant défini(s) tel que selon l'une quelconque des revendications 2 à 7.

13. Utilisation d'une combinaison d'un adjuvant de broyage et d'un adjuvant pour béton dans une composition comprenant du ciment en tant qu'accélérateur de durcissement pour l'accélération de l'hydratation du ciment par ajout d'eau,
l'adjuvant de broyage comprenant au moins un aminoalcool et comprenant au moins une substance accélérant l'hydratation du ciment choisie parmi un chlorure, un thiocyanate ou une combinaison d'un chlorure et d'un thiocyanate, l'adjuvant de broyage comprenant en outre éventuellement un ou plusieurs adjuvant(s) du ciment, par exemple des composés de glycol, des composés polymères ou des agents antimousses et
l'adjuvant pour béton comprenant un produit de réaction d'au moins un composé de calcium avec au moins un composé de silicium choisi parmi un composé de dioxyde de silicium, un composé de silice et un composé de silicate.

14. Utilisation selon la revendication 13, l'adjuvant de broyage et/ou l'adjuvant pour béton étant défini(s) tel que selon l'une quelconque des revendications 2 à 7.
